**Europäisches Patentamt**

**European Patent Office**

**Office européen des brevets**

(19)

(11) Numéro de publication : **0 498 762 A1**

## (12) DEMANDE DE BREVET EUROPEEN

(21) Numéro de dépôt : **92810048.6**

(22) Date de dépôt : **24.01.92**

(51) Int. Cl.⁵ : **H04Q 9/14**

(30) Priorité : **08.02.91 FR 9101439**

(43) Date de publication de la demande :
**12.08.92 Bulletin 92/33**

(84) Etats contractants désignés :
**BE CH DE ES IT LI**

(71) Demandeur : **SOMFY**
**8, Avenue de Margencel**
**F-74300 Cluses (FR)**

(72) Inventeur : **Orsat, Jean-Michel**
**Le Pissoir**
**F-74300 Chatillon Sur Cluses (FR)**

(74) Mandataire : **Meylan, Robert Maurice et al**
**c/o BUGNION S.A. 10, route de Florissant**
**Case Postale 375**
**CH-1211 Genève 12 - Champel (CH)**

(54) **Installation comprenant une pluralité de récepteurs électriques susceptibles d'être commandés par des commandes locales et des commandes de groupes.**

(57) Installation comprenant une pluralité de récepteurs électriques (R), des dispositifs de commande locale (CL) associés respectivement à chacun des récepteurs (R) et des dispositifs de commande de groupes (CG) pour la commande simultanée de plusieurs récepteurs par l'intermédiaire des dispositifs de commande locale (CL) et des lignes (B1 à B8) respectivement communes à plusieurs dispositifs de commande locale. Une partie au moins des récepteurs est associée a un détecteur (D). Les commandes de groupes et les commandes locales sont disposées selon une structure arborescente. Elles comportent chacune un clavier pour l'introduction d'ordres d'un premier type et une une ULT programmée de telle sorte que les signaux du premier type ne peuvent pas remonter en amont, alors que des signaux d'un second type provenant des détecteurs peuvent redescendre l'arborescence en activant un témoin et/ou une alarme dans chaque commande de groupes traversée.

La mise en place d'une telle installation ne requiert pas de connaissance particulière. Le câblage est simple et la mise en oeuvre rapide. Elle ne nécessite pas de programmation.

FIG1

EP 0 498 762 A1

La présente invention a pour objet une installation comprenant une pluralité de récepteurs électriques, des dispositifs de commande locale associés respectivement à chacun des récepteurs et des dispositifs de commande de groupes pour la commande simultanée de plusieurs récepteurs par l'intermédiaire des dispositifs de commande locale et des lignes respectivement communes à plusieurs dispositifs de commande locale.

L'installation selon l'invention est particulièrement destinée à la commande de volets roulants, portes ou éléments de fermeture similaires motorisés.

Une installation de ce type est connue du brevet AT-329 837. Dans cette installation, les dispositifs de commande locale sont constitués d'appareils de commutation susceptibles d'être commandés soit individuellement au moyen d'un commutateur, soit par groupe à partir du dispositif de commande de groupes constitué d'amplificateurs reliés, d'une part, entre eux par une ligne commune à trois fils et, d'autre part, à un groupe d'appareils de commutation par des lignes à trois fils auxquels il faut ajouter une ligne d'alimentation à trois fils. Une telle installation est donc complexe du point de vue du câblage et en outre ne permet pas de transmettre en amont des informations provenant d'un détecteur associé au récepteur, détecteur dont sont pourvues les installations modernes à fin de détection d'intrusion, d'obstacles ou autres incidents et dont la communication en amont devrait permettre à l'utilisateur de localiser l'incident depuis un dispositif de commande de groupes.

On connaît certes des systèmes de transmission bidirectionnelle, tels que par exemple le système décrit dans le brevet BE 900 816, mais de tels systèmes, s'ils présentent généralement un câblage plus simple, font appel à des techniques d'adressage complexes et difficilement exploitables économiquement dans des installations de commande de volets roulants, de portes ou éléments de fermeture similaires, où les utilisateurs n'ont généralement pas les connaissances techniques indispensables, de tels systèmes de transmission bidirectionnelle supposant une configuration de l'installation par l'utilisateur.

La présente invention a pour but de mettre à la disposition de l'utilisateur une installation simple, facile à installer, présentant un câblage réduit et permettant de transmettre de façon simple et sélective des ordres à partir des dispositifs de commande de groupes aux récepteurs et, inversément, de transmettre des signaux émis par des détecteurs aux dispositifs de commande de groupes.

A cet effet, l'installation selon l'invention est caractérisée en ce qu'à une partie au moins des récepteurs est associé un détecteur, que les dispositifs de commande locale et les dispositifs de commande de groupes sont disposés selon une structure arborescente à plusieurs étages dans laquelle chaque dispositif de commande comporte une ULT (unité logique de traitement) reliée à une sortie amont et à une sortie aval et un clavier pour l'introduction d'ordres d'un premier type, un bus reliant, à chaque étage, la sortie aval de chaque dispositif de commande de groupes aux sorties amont des dispositifs de commande de groupes de l'étage supérieur, respectivement des dispositifs de commande locale, que les ULT des dispositifs de commande locale sont en outre reliées aux récepteurs et aux détecteurs correspondants et qu'elles sont programmées, d'une part, pour délivrer sur la sortie amont, en réponse aux signaux reçus du détecteur, des ordres d'un second type et pour accepter sur la sortie amont seulement les ordres du premier type, d'autre part, pour activer un sous-programme de commande du récepteur, correspondant au contenu de l'ordre du premier type accepté en sortie amont et/ou aux ordres du premier type reçus de son clavier, et que les ULT des dispositifs de commande de groupes sont programmées, d'une part, pour accepter sur la sortie amont seulement les ordres du premier type et les transmettre en aval et pour délivrer sur la sortie aval des ordres du premier type en réponse aux signaux reçus du clavier et, d'autre part, accepter sur la sortie aval seulement les ordres du second type et les transmettre en amont.

La mise en place d'une telle installation ne requiert pas de connaissance particulière. Il suffit de distinguer entre les dispositifs de commande locale et les dispositifs de commande de groupes et de respecter la structure arborescente. Le câblage est simple et la mise en oeuvre est rapide car l'installation ne nécessite pas de programmation par l'installateur.

Les ULT des dispositifs de commande de groupes peuvent en outre être programmées pour activer un sous-programme de commande d'une alarme ou d'un témoin.

Dans une forme plus évoluée de réalisation, les dispositifs de commande locale comportent des récepteurs infrarouges susceptibles d'émettre des signaux de commande groupée ou non groupée en réponse à un signal reçu d'un émetteur de télécommande, et les ULT de ces dispositifs de commande sont en outre prévues pour délivrer en sortie amont, en réponse aux signaux reçus du récepteur infrarouge, des ordres du premier type si le signal correspond à une commande groupée et pour activer le sous-programme de commande du récepteur dans le cas contraire.

Un mode de réalisation de l'invention sera décrit à titre d'exemple en relation avec le dessin annexé dans lequel :

La figure 1 représente le schéma de l'installation;
la figure 2 représente, plus en détail, une partie de l'installation représentée à la figure 1;
la figure 3 représente le schéma d'un dispositif de commande de groupe;
la figure 4 représente le schéma d'un dispositif de commande locale sans récepteur infrarouge;

la figure 5 représente l'organigramme du programme de commande de groupe;

la figure 6 représente l'organigramme du programme de commande locale du dispositif de commande locale représenté à la figure 4;

la figure 7 représente un dispositif de commande locale avec récepteur infrarouge; et

la figure 8 représente l'organigramme du programme du dispositif de commande locale représenté à la figure 6.

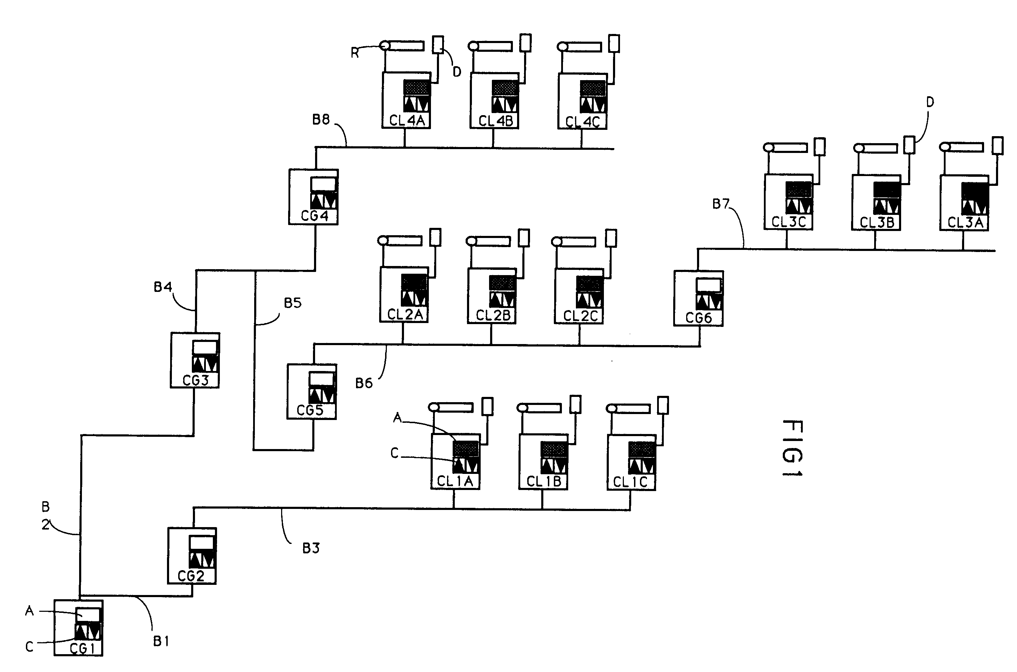

L'installation représentée à la figure 1 comprend quatre groupes de dispositifs de commande locale CL soit un premier groupe de commande locale CL1A, CL1B, CL1C, un deuxième groupe CL2A, CL2B, CL2C, un troisième groupe CL3A, CL3B, CL3C ... et un quatrième groupe CL4A, CL4B, CL4C ... L'installation comprend également des dispositifs de commande de groupes CG1, CG2, CG3, CG4, CG5 et CG6, les dispositifs de commande de groupe et les dispositifs de commande locale étant reliés selon une structure arborescente par des bus B1 à B8. Chaque dispositif de commande locale est associé à un récepteur électrique R, par exemple un moteur, et à un détecteur D.

Chaque dispositif de commande de groupes et de commande locale comprend un clavier C pour l'introduction d'ordres et un dispositif d'affichage A.

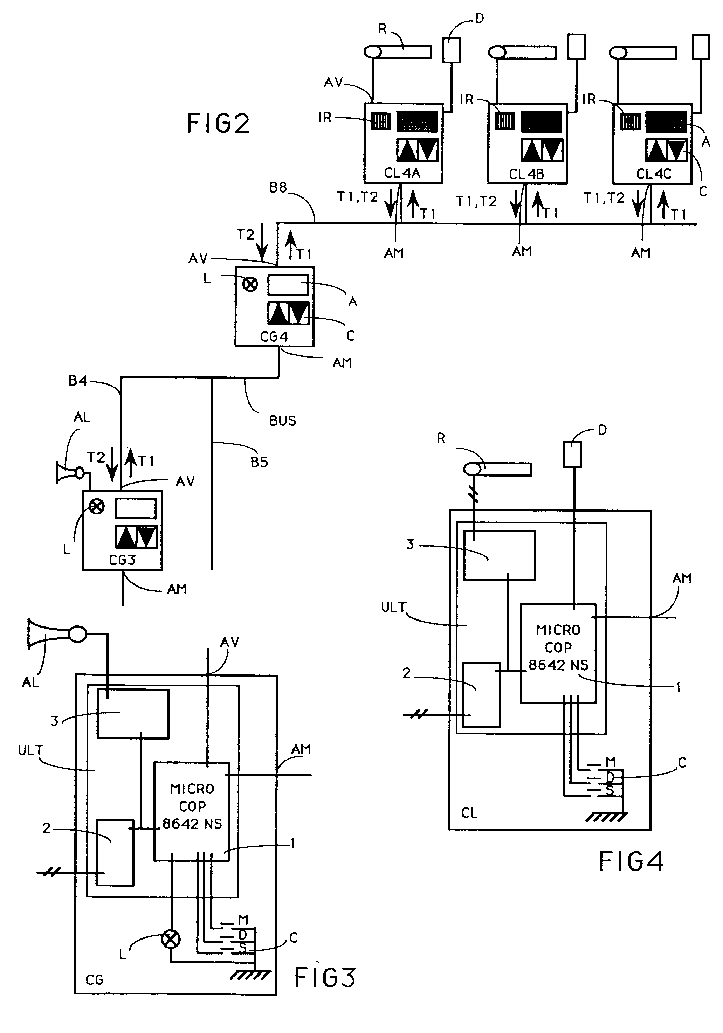

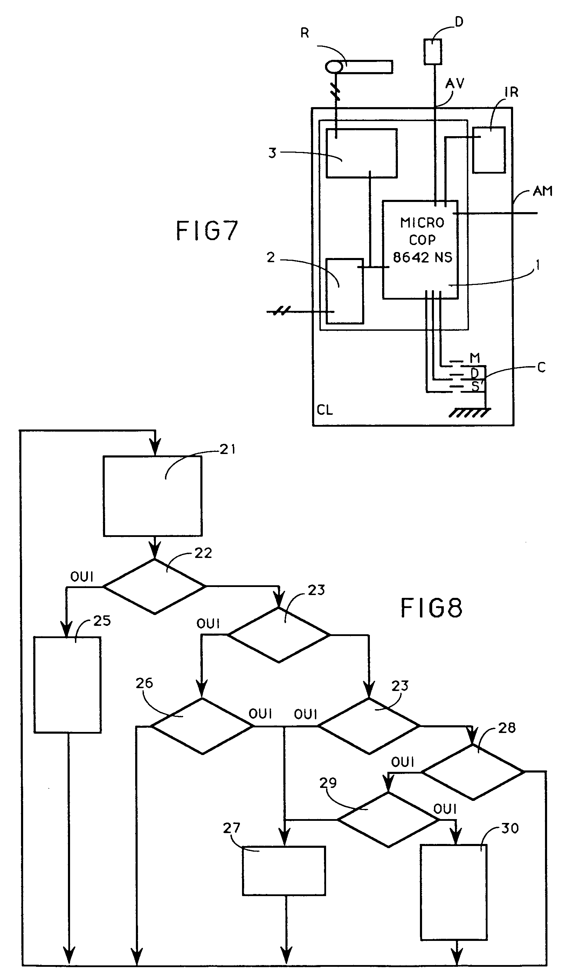

Comme représenté à la figure 2, les commandes de groupe sont en outre équipées d'un témoin L et d'une alarme AL. Dans une forme plus évoluée, qui sera décrite en relation avec les figures 7 et 8, les commandes locales sont en outre équipées d'un récepteur infrarouges IR.

Les claviers C sont équipés de trois touches commandant respectivement un contact M, D, S (figures 3 et 4).

Chaque dispositif de commande de groupe comprend une unité logique de traitement ULT comprenant un micro-calculateur 1, en l'occurrence un micro-calculateur MICRO-COP 8642 NS, une alimentation 2 et une interface 3 pour l'alarme AL. L'ULT présente une sortie amont AM reliée au bus amont et une sortie aval AV reliée au bus aval.

Les dispositifs de commande locale CL sont équipés de la même ULT dont l'interface 3 sert d'interface au récepteur électrique R. La sortie amont AM de l'ULT est reliée au bus amont, tandis que la sortie aval est reliée au détecteur D.

Les bus B1, B2, B3, B4, B6 relient les sorties aval AV des dispositifs de commande de groupes aux sorties amont des dispositifs de commande de groupes de l'étage supérieur. Le bus B6 relie en outre la sortie aval de la commande de groupes CG5 aux sorties amont des dispositifs de commande locale CL2A, CL2B et CL2C. Les bus B3, B7 et B8 relient les sorties aval des commandes de groupes CG2, CG6 et CG4 respectivement à un groupe de commandes locales.

Les ordres donnés au moyen des claviers C (montée, descente, stop) seront appelés des ordres du premier type T1.

Les ordres provenant d'un détecteur D seront appelés ordres du second type T2.

Les ULT des dispositifs de commande locale CL et des dispositifs de commande de groupes CG comportent un programme principal et des sous-programmes.

Les dispositifs de commande locale CL (figure 4) comportent un sous-programme d'émission d'un ordre du second type sur leur sortie amont AM et un sous-programme de commande récepteur.

Les dispositifs de commande de groupe CG (figure 3) comportent un sous-programme de commande d'alarme et de témoin et un sous-programme d'émission d'un ordre du premier type sur leur sortie aval AV.

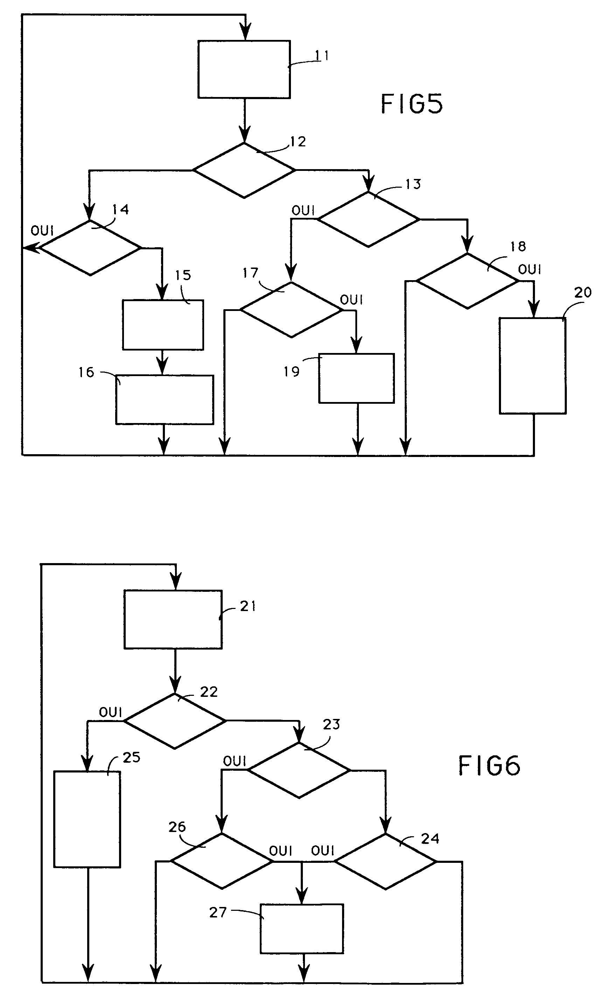

Le programme principal des commandes de groupes CG est représenté à la figure 5. Ce programme se déroule comme suit :

L'instruction 11 scrute les bus sortie aval AV / amont AM et le clavier C. Si le bus sortie aval est actif, l'instruction 12 appelle l'instruction 14 qui teste la présente d'un ordre du premier type. Si un tel ordre est présent, l'instruction reboucle sur l'instruction 11 sans aucune action. Dans le cas contraire, elle appelle l'instruction 15, puis l'instruction 16 qui successivement transmettent l'ordre en sortie amont et activent le sous-programme de commande alarme/témoin.

Un ordre du premier type arrivant en sortie aval AV n'est pas retransmis en sortie amont AM, alors qu'un ordre du second type est retransmis en sortie amont AM, alors qu'un ordre du second type est retransmis et déclenche au passage l'alarme AL et/ou le témoin L.

Si le bus amont est actif, l'instruction 13 appelle l'instruction 17 qui teste la présence d'un ordre du premier type. Dans la négative elle reboucle sur l'instruction 11 sans aucune action. Dans le cas contraire, elle appelle l'instruction 19 qui transmet l'ordre en sortie aval AV.

Si le bus sortie amont n'est pas actif l'instruction 13 appelle l'instruction 18 qui teste le clavier C.

Si le clavier C est actif, l'instruction 18 appelle l'instruction 20 qui active le sous-programme d'émission d'un ordre du premier type en sortie aval AV.

Un ordre du premier type arrivant en sortie amont est donc retransmis en sortie aval. L'activation du clavier C engendre l'émission d'un ordre du premier type en sortie aval.

Le programme principal d'un dispositif de commande locale CL est représenté à la figure 6. Ce programme se déroule comme suit :

L'instruction 21 scrute le bus sortie amont, le détecteur de défauts D et le clavier C. Si le détecteur de défauts D est actif, l'instruction 22 appelle l'instruction 25 qui active le sous-programme d'émission d'un ordre du second type sur la sortie amont AM.

Si le bus amont est actif, l'instruction 23 appelle l'instruction 26. Si 26 teste la présence d'un ordre du premier type, elle appelle l'instruction 27 qui active le sous-programme de commande du récepteur R. Dans le cas contraire elle reboucle sur l'instruction 21 sans aucune action.

Si le clavier C est actif, l'instruction 24 appelle l'instruction 27 qui, comme précédemment, active le sous-programme de commande récepteur R.

L'activation du détecteur de défauts D engendre donc l'émission d'un ordre du second type en sortie amont de la commande locale CL.

Un ordre du premier type arrivant en sortie amont ou émis par le clavier C de la commande locale CL est retransmis au récepteur R qui lui est lié.

Si l'utilisateur active le clavier C d'une commande de groupe CG, celle-ci émet en sortie aval AV un ordre du premier type.

Les ordres du premier type arrivant en sortie amont AM des commandes de groupes CG sont retransmis en aval de celles-ci.

Les ordres du premier type arrivant en sortie aval AV ne sont pas retransmis en amont.

Les ordres du premier type arrivant en sortie amont AM des commandes locales CL sont retransmis aux récepteurs.

L'ordre émis au moyen d'un clavier C d'une commande de groupe CG est dont exécuté par tous les récepteurs situés en aval, c'est-à-dire dans tous les embranchements à partir de cette commande de groupe.

Par exemple, une commande émise à partir du clavier C de la commande de groupe CG1 (figure 1) est transmise à l'ensemble des récepteurs R, tandis que celle émise à partir de la commande de groupe CG3 est transmise aux récepteurs CL4, CL2, CL3 et que celle émise par la commande de groupe CG2 ou CG6 est respectivement retransmise aux récepteurs CL1 et CL3. Une commande émise à partir du clavier C de la commande locale CL4A est transmise à son récepteur.

L'utilisateur peut donc activer par le choix de la commande la totalité ou une fraction des récepteurs ou encore un récepteur bien déterminé.

Si un détecteur D devient actif, la commande locale CL émet un ordre du second type sur sa sortie amont AM. Les ordres du second type arrivant en aval de commandes de groupes CG sont retransmis en amont et déclenchent au passage l'alarme AL et/ou le témoin L. Les ordres du second type arrivant en amont de commandes de groupes CG ne sont pas retransmis en aval, l'ordre émis par le détecteur D étant retransmis aux commandes de groupes CG de la ligne en descendant l'arborescence et en déclenchant au passage l'alarme et/ou le témoin de la commande de groupe traversée.

Si, par exemple, le détecteur D de la commande locale CL4A devient actif, les témoins et alarmes des commandes de groupes CG4, CG3, et CG1 sont activés. Si au contraire le détecteur D de la commande locale CL3B devient actif, ce sont les témoins et alarmes des commandes de groupes CG6, CG5, CG3, CG1, qui sont activés.

L'utilisateur peut donc, à partir de la commande de groupe CG1, par observation des témoins et en remontant l'arborescence identifier facilement le détecteur devenu actif.

L'organigramme du programme principal de la forme évoluée de la commande locale représentée à la figure 7 est représentée à la figure 8. Ce programme se déroule comme suit :

Si le récepteur infrarouge IR devient actif, l'instruction 28 appelle l'instruction 29. Si l'instruction 29 teste que le signal n'est pas celui d'une commande groupée, il appelle l'instruction 27 qui active le sous-programme de commande du récepteur R lié à la commande.

La réception d'un signal autre qu'un signal de commande groupée déclenche donc l'émission d'un ordre de commande au récepteur R lié à la commande locale CL.

Si l'instruction 29 teste que le signal est celui d'une commande groupée CG, elle appelle l'instruction 30 qui active le sous-programme d'émission d'un ordre du premier type sur la sortie amont AM.

La réception, par le récepteur IR, d'un signal de commande groupée déclenche donc l'émission d'un ordre du premier type en sortie amont de la commande locale.

Un ordre du premier type est retransmis exclusivement d'amont en aval par les commandes de groupes et il est retransmis aux récepteurs R par les commandes locales. L'ordre émis par un émetteur IR d'une commande locale est donc exécuté par le récepteur R correspondant, ainsi que par les récepteurs R situés en aval dans l'arborescence.

Si le récepteur IR d'une commande locale reçoit un signal de commande groupée, celle-ci génère en sortie amont un ordre du premier type.

Un ordre du premier type étant retransmis exclusivement d'amont en aval par les commandes de groupes CG et retransmis aux récepteurs R par les commandes locales CL, l'ordre émis par une commande locale suite à la réception d'un signal IR de commande groupée est exécuté par tous les récepteurs R situés en montant l'arborescence, y compris le récepteur R de la commande locale qui a généré l'ordre.

## Revendications

1. Installation comprenant une pluralité de récepteurs électriques (R), des dispositifs de commande locale (CL) associés respectivement à chacun des récepteurs (R) et des dispositifs de commande de groupes (CG) pour la commande simultanée de plusieurs récepteurs par l'intermédiaire des dispositifs de commande locale (CL) et des lignes (B1 à B8) respectivement communes à plusieurs dispositifs de commande locale, caractérisée en ce qu'à une partie au moins des récepteurs (R) est associé un détecteur (D), que les dispositifs de commande locale (CL) et les dispositifs de commande de groupes (CG) sont disposés selon une structure arborescente à plusieurs étages dans laquelle chaque dispositif de commande comporte une ULT (unité logique de traitement) reliée à une sortie amont (AM) et à une sortie aval (AV) et un clavier (C) pour l'introduction d'ordres d'un premier type (T1), un bus (B1 à B8) reliant, à chaque étage, la sortie aval de chaque dispositif de commande de groupes (CG) aux sorties amont des dispositifs de commande de groupe de l'étage supérieur, respectivement des dispositifs de commande locale (CL), que les ULT des dispositifs de commande locale (CL) sont en outre reliées aux récepteurs et aux détecteurs correspondants et qu'elles sont programmées, d'une part, pour délivrer sur la sortie amont, en réponse aux signaux reçus du détecteur (D), des ordres d'un second type (T2) et pour accepter, sur la sortie amont seulement, les ordres du premier type (T1), d'autre part, pour activer un sous-programme de commande du récepteur, correspondant au contenu de l'ordre du premier type accepté en sortie amont et/ou aux ordres du premier type reçus de son clavier (C), et que les ULT des dispositifs de commande de groupes sont programmées, d'une part, pour accepter sur la sortie amont seulement les ordres du premier type (T1) et les transmettre en aval et/ou délivrer sur la sortie aval des ordres du premier type en réponse aux signaux reçus du clavier (C) et, d'autre part, accepter sur la sortie aval seulement les ordres du second type (T2) et les transmettre en amont.

2. Installation selon la revendication 1, caractérisée en ce que les ULT des dispositifs de commande de groupe sont en outre programmées pour activer un sous-programme de commande d'alarme (AL) et/ou d'un témoin (L).

3. Installation selon la revendication 1 ou 2, caractérisée en ce que les dispositifs de commande locale (CL) comportent un récepteur infrarouge (IR) susceptible d'émettre des sigaux de commande groupée ou non groupée en réponse à un signal reçu d'un émetteur de télécommande et que les ULT des ces dispositifs de commande locale (CL) sont en outre prévues pour délivrer en sortie amont, en réponse aux signaux reçus du récepteur infrarouge, des ordres du premier type si le signal correspond à une commande groupée et pour activer le sous-programme de commande du récepteur si le signal ne correspond pas à une commande groupée.

FIG1

FIG2

FIG3

FIG4

FIG5

FIG6

FIG7

MICRO
COP
8642 NS

FIG8

Office européen
des brevets

**RAPPORT DE RECHERCHE EUROPEENNE**

Numero de la demande

EP 92 81 0048

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 354 175 (SOMFY) <br> * le document en entier * <br> --- | 1,2 | H04Q9/14 |
| A | FR-A-2 289 950 (INTERNATIONAL HOME SYSTEMS) <br> * revendications * <br> --- | 1-3 | |
| A | DE-A-3 110 614 (SIEMENS AKTIENGESELLSCHAFT BERLIN UND MÜNCHEN) <br> --- | 1-3 | |
| A | FR-A-2 510 777 (ETABLISSEMENTS CARPANO & PONS) <br> * revendications * <br> ----- | 1,2 | |

**DOMAINES TECHNIQUES RECHERCHES (Int. Cl.5)**

H04Q
G08C

Le présent rapport a été établi pour toutes les revendications

| Lieu de la recherche | Date d'achèvement de la recherche | Examinateur |
|---|---|---|
| LA HAYE | 18 MAI 1992 | REEKMANS M.V. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)